# EUROPEAN PATENT APPLICATION

(11) **EP 4 749 818 A1**
(43) Date of publication of application: **27.05.2026**
(21) Application number: 25162606.5
(22) Date of filing: 10.03.2025
(51) Int. Cl.: H01Q 1/28, B64U 10/14, B64U 60/50, H01Q 1/44

(54) **DRONE AND ARM**

(30) Priority: 26.11.2024 TW 113145613
(71) Applicant: Wistron Corporation, New Taipei City 22181 (TW)
(72) Inventor: LIN, Shih Han, 22181 New Taipei City (TW)
(74) Representative: Becker, Eberhard

(57) **Abstract**

A drone includes a main body, an arm structure, and a stand. The arm structure is disposed on an outer side of the drone body. The stand has an antenna module. The antenna module is disposed in the stand and extends along an inner wall of the arm structure into the main body. The stand is detachably assembled to the arm structure.

## Description

### BACKGROUND

### Technical Field

This disclosure relates to a drone and an arm, and in particular to a drone including an antenna and an arm thereof.

### Description of Related Art

In order to improve the wireless communication range between a commercial quadcopter and a ground station, the antenna of a drone is usually placed far away from the body to minimize the antenna from being interfered by the noise inside the body. Specifically, it is common practice to place the antenna in a stand underneath the arm of the drone, and to weld the wires between the antenna in the stand and the circuit board inside the body. On the other hand, the drone may have different antenna designs for different frequency bands (1.2GHz, 2.4GHz, 5.8Ghz) according to the requirements of the product application, so the corresponding antenna materials may be different, and it is necessary to test and compare various antenna designs during the optimization process in the early stage of product development. As mentioned above, since the antenna is connected to the body of the drone through the wire as mentioned above, and the arm and the stand are one-piece structure, the entire chassis and arm of the drone have to be disassembled in order to replace the antenna, which is time-consuming and labor-intensive.

### SUMMARY

The disclosure provides a drone and an arm structure, allowing an antenna to be easily replaced.

The drone of the disclosure includes a main body, an arm structure, and a stand. The arm structure is disposed on an outer side of the main body. The stand has an antenna module. The antenna module is disposed in the stand and extends along an inner wall of the arm structure into the main body. The stand is detachably assembled to the arm structure.

In an embodiment of the disclosure, the antenna module includes an antenna body and a wire component. The antenna body is disposed in the stand. The wire component is connected to the antenna body and extends along the inner wall of the arm structure into the main body.

In an embodiment of the disclosure, the arm structure includes an arm portion, the arm portion is connected to the main body and has a first assembly portion, the stand has a second assembly portion, and the second assembly portion is detachably assembled to the first assembly portion.

In an embodiment of the disclosure, the first assembly portion includes a slot, and the second assembly portion includes two hooks respectively engaged with two opposite inner edges of the slot.

In an embodiment of the disclosure, the first assembly portion further includes a sliding member and an elastic member. The sliding member is slidably disposed on the arm portion to form one of the two inner edges of the slot. The elastic member is disposed between the sliding member and the arm portion, and the sliding member is maintained in an engaged position by elastic force of the elastic member.

In an embodiment of the disclosure, the wire component includes a first wire and a second wire. The first wire is connected to the antenna body and has a first connection portion. The second wire has a second connection portion. The first connection portion is pluggably connected to the second connection portion, and the second wire extends along the arm portion into the main body.

In an embodiment of the disclosure, the first connection portion and the second connection portion are radio frequency connectors.

In an embodiment of the disclosure, the second connection portion is disposed at a position of the arm portion corresponding to the stand.

In an embodiment of the disclosure, the drone further includes a circuit board. The circuit board is disposed in the main body, and the second wire is connected to the circuit board.

In an embodiment of the disclosure, the drone includes multiple arm structures, multiple stands, and multiple antenna modules. The antenna modules are respectively disposed in some of the stands.

In an embodiment of the disclosure, the drone further includes a structural reinforcement rod connected between two of the stands.

In an embodiment of the disclosure, the antenna module further includes an elastic structure compressed between the antenna module and the stand, and the antenna module is positioned in the stand by elastic force of the elastic structure.

In an embodiment of the disclosure, the elastic structure includes two elastomers, and the two elastomers are respectively disposed at opposite ends of the antenna body.

In an embodiment of the disclosure, each of the elastomers is sleeved on the antenna body.

In an embodiment of the disclosure, the stand has a support end relative to the arm structure, and a width of an internal space of the stand gradually decreases in a direction from the arm structure toward the support end.

In an embodiment of the disclosure, the drone further includes a cover. The cover is adapted to replace the stand and be detachably assembled to the arm structure.

In an embodiment of the disclosure, the drone further includes a light-emitting element. The light-emitting element is disposed on the stand.

A drone of the disclosure includes a main body, an arm structure, and a stand. The arm structure is disposed on an outer side of the main body. The stand is connected to the arm structure and has an antenna module. The antenna body is disposed in the stand and includes a first wire and a second wire. The first wire is located in the stand, and the second wire extends along an inner wall of the arm structure into the main body. The first wire is pluggably connected to the second wire.

In an embodiment of the disclosure, the arm structure includes an arm portion connected between the main body and the stand, and the second wire extends along the arm portion into the main body.

In an embodiment of the disclosure, the antenna module includes an antenna body and a wire component. The antenna body is disposed in the stand. The wire component includes a first wire and a second wire. The first wire is connected to the antenna body and has a first connection portion, the second wire has a second connection portion, and the first connection portion is pluggably connected to the second connection portion.

In an embodiment of the disclosure, the first connection portion and the second connection portion are radio frequency connectors.

In an embodiment of the disclosure, the second connection portion is disposed at a position corresponding to the stand of the arm structure.

In an embodiment of the disclosure, the drone further includes a circuit board. The circuit board is disposed in the main body, and the second wire is connected to the circuit board.

An arm of the disclosure is adapted to a drone, including an arm portion and a stand. The arm portion has a first assembly portion. The first assembly portion includes a slot, a sliding member, and an elastic member. The sliding member is slidably disposed on the arm portion to form one of two opposite inner edges of the slot. The elastic member is disposed between the sliding member and the arm portion. The sliding member is maintained in an engaged position by elastic force of the elastic member. The stand has a second assembly portion. The second assembly portion includes two hooks respectively engaged with the two inner edges.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate example embodiments of the disclosure and, together with the description, serve to explain the principles of the disclosure.
FIG. 1 is a perspective view of a drone according to an embodiment of the disclosure.
FIG. 2 is a perspective view of an arm structure an antenna module in FIG. 1.
FIG. 3 is an exploded view of an arm structure an antenna module in FIG. 2.
FIG. 4A to FIG. 4D illustrate a disassembly method of a stand in FIG. 2.
FIG. 5A and FIG. 5B illustrate a separation method of a first connection portion and a second connection portion in FIG. 2.
FIG. 6A and FIG. 6B illustrate a combination method of a second connection portion and another first connection portion in FIG 2.
FIG. 7A to FIG. 7D illustrate an assembly method of the stand in FIG. 2.
FIG. 8 illustrates a partial structure of the stand and the antenna module in FIG. 2.
FIG. 9 illustrates the stand in FIG. 2 replaced with a cover.
FIG. 10 is a perspective view of the cover in FIG. 9.
FIG. 11 is a perspective view of a drone according to another embodiment of the disclosure.
FIG. 12 is a perspective view of an arm structure according to another embodiment of the disclosure.

### DESCRIPTION OF THE EMBODIMENTS

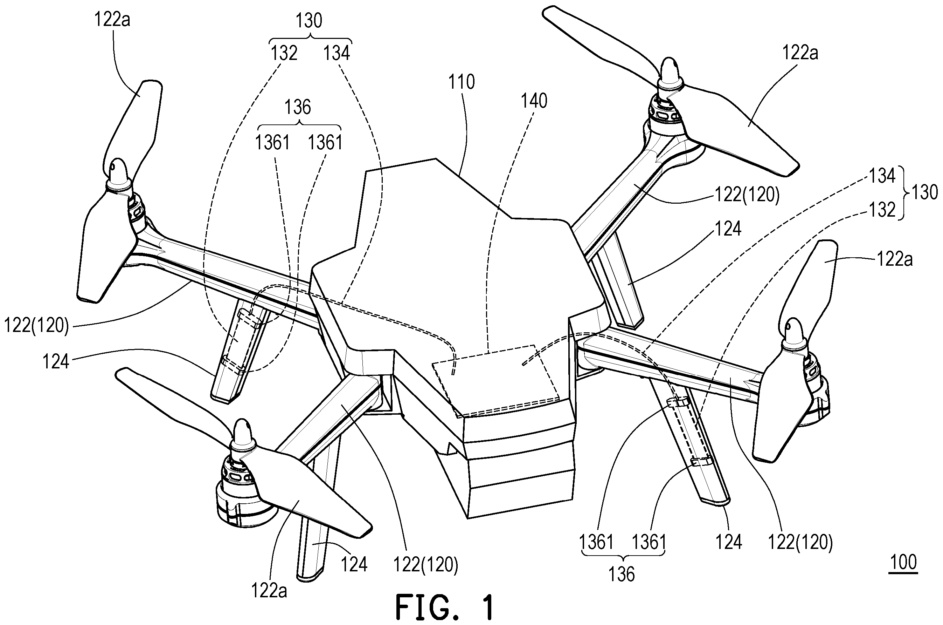

FIG. 1 is a perspective view of a drone according to an embodiment of the disclosure. Referring to FIG. 1, a drone 100 in this embodiment is, for example, a commercial quadcopter, and includes a main body 110, multiple arm structures 120 (four arm structures 120 are shown), multiple stands 124, and a circuit board 140. Each arm structure 120 is disposed on the outer side of the main body 110 and includes an arm portion 122. The arm portion 122 is connected to the main body 110 and is provided with a propeller 122a. The stand 124 is connected to the arm portion 122 and extends downward to support the main body 110 parked on the ground. Each stand 124 and the corresponding arm portion 122 constitute an arm of the drone 100. Part of the stand 124 has an antenna module 130 (two antenna modules 130 are shown). The two antenna modules 130 are respectively disposed in two stands 124 and extend into the main body 110 along the inner wall of the arm structure 120. The two antenna modules 130 may have different types and/or functions respectively, and the disclosure is not limited thereto. The stand 124 is detachably assembled to the arm structure 120.

Specifically, each antenna module 130 includes an antenna body 132 and a wire component 134. The antenna body 132 is disposed in the stand 124 and is used to send and receive signals for wireless communication with the ground station. The circuit board 140 is, for example, the main control circuit board of the drone 110 and is disposed in the main body 110. The antenna body 132 is connected to the circuit board 140 through the wire component 134, so that the signals can be transmitted between the antenna body 132 and the circuit board 140.

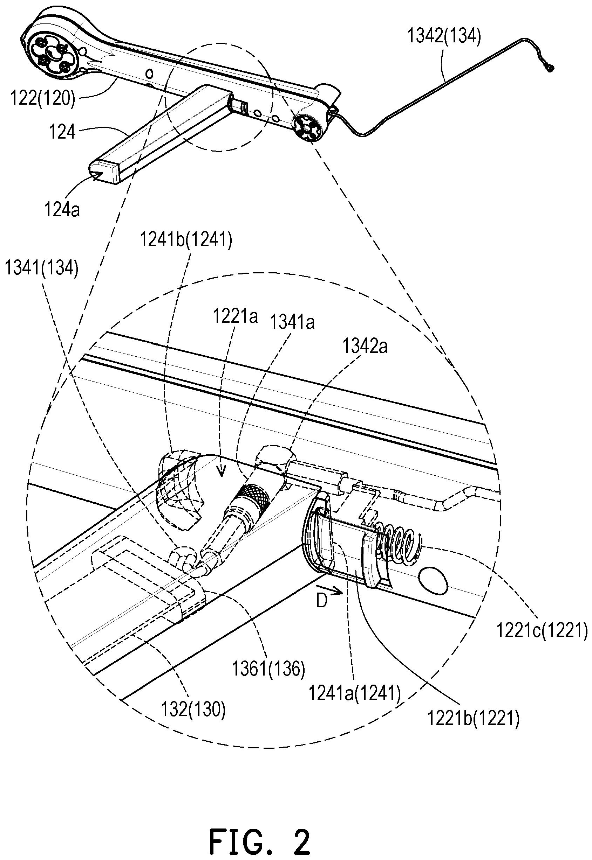

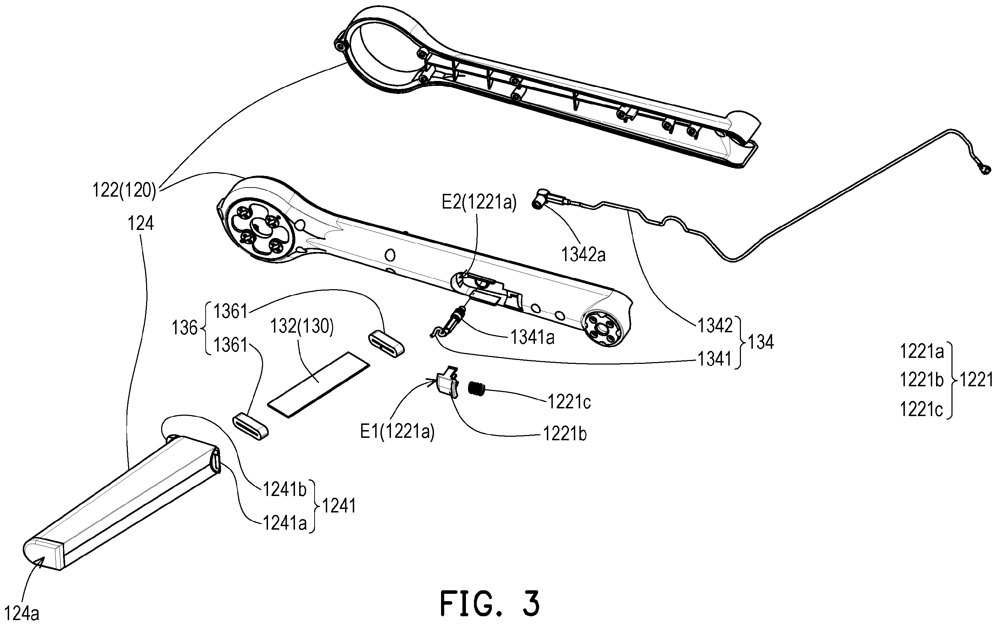

FIG. 2 is a perspective view of an arm structure an antenna module in FIG. 1. FIG. 3 is an exploded view of an arm structure an antenna module in FIG. 2. Referring to FIG. 2 and FIG. 3, the arm portion 122 of this embodiment has a first assembly portion 1221, the stand 124 has a second assembly portion 1241, and the second assembly portion 1241 is detachably assembled to the first assembly portion 1221. The wire component 134 in FIG. 1 is only a schematic illustration. The wire component 134 may actually include a first wire 1341 and a second wire 1342 as shown in FIG. 2 and FIG. 3. The first wire 1341 is located in the stand 124 and is welded to the antenna body 132 and has a first connection portion 1341a, and the second wire 1342 has a second connection portion 1342a. The first connection portion 1341a of the first wire 1341 is pluggably connected to the second connection portion 1342a of the second wire 1342. The second wire 1342 extends along the inner wall of the arm portion 122 of the arm structure 120 into the main body 110 shown in FIG. 1 and is connected to the circuit board 140 by welding. In this embodiment, the first connection portion 1341a and the second connection portion 1342a are, for example, radio frequency connectors, and the first wire 1341 and the second wire 1342 are, for example, coaxial cables, but the disclosure is not limited thereto.

As mentioned above, in the drone 100 of this embodiment, the stand 124 is designed to be detachable from the arm portion 122 of the arm structure 120, and the wire component 134 of the antenna module 130 includes a first wire 1341 and a second wire 1342 that are separable from each other. Accordingly, the antenna body 132 in the stand 124 can be replaced by simply disassembling the stand 124 from the arm portion 122 of the arm structure 120 and separating the first wire 1341 and the second wire 1342 from each other, so there is no need to dismantle the entire chassis of the main body 110 and the arm structure 120 in order to replace the antenna body 132 in the stand 124.

Specifically, as shown in FIG. 2 and FIG. 3, the first assembly portion 1221 of the arm portion 122 includes a slot 1221a, a sliding member 1221b, and an elastic member 1221c. The sliding member 1221b is slidably disposed on the arm portion 122 in a sliding direction D to form an inner edge E1 of two opposite inner edges E1 and E2 of the slot 1221a. The elastic member 1221c is, for example, a compression spring and is disposed between the sliding member 1221b and the arm portion 122. The sliding member 1221b is maintained in the engaged position shown in FIG. 2 by the elastic force of the elastic member 1221c. The second assembly portion 1241 of the stand 124 includes two hooks 1241a and 1241b. The two hooks 1241a and 1241b are respectively engaged with the two inner edges E1 and E2 of the slot 1221a to detachably assemble the stand 124 to the arm portion 122. Furthermore, as shown in FIG. 2, the second connection portion 1342a is disposed at a position of the arm portion 122 corresponding to the stand 124. With this configuration, the stand 124 can be easily disassembled and assembled and the antenna body 132 can be replaced. This is explained in detail below through drawings.

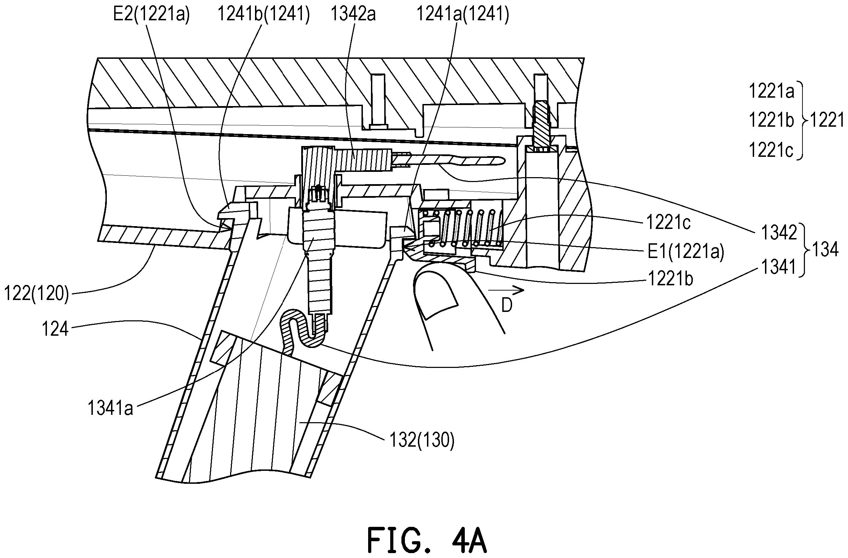

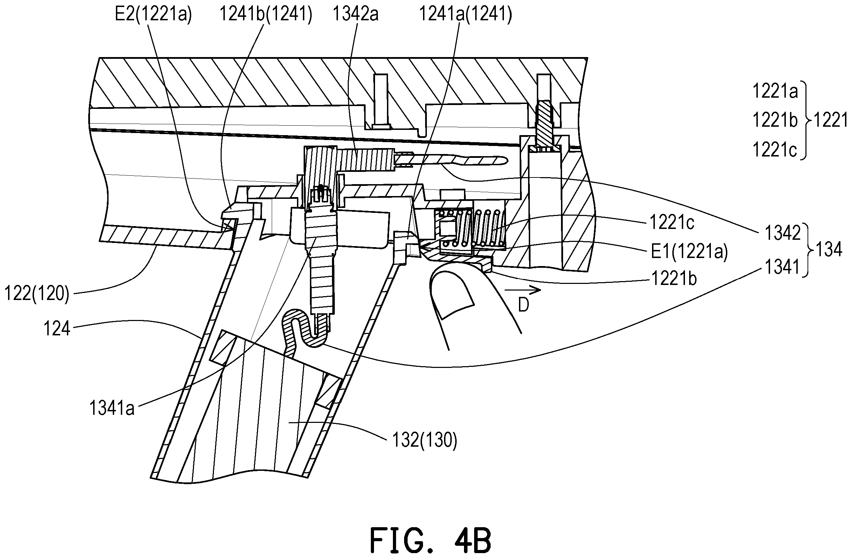

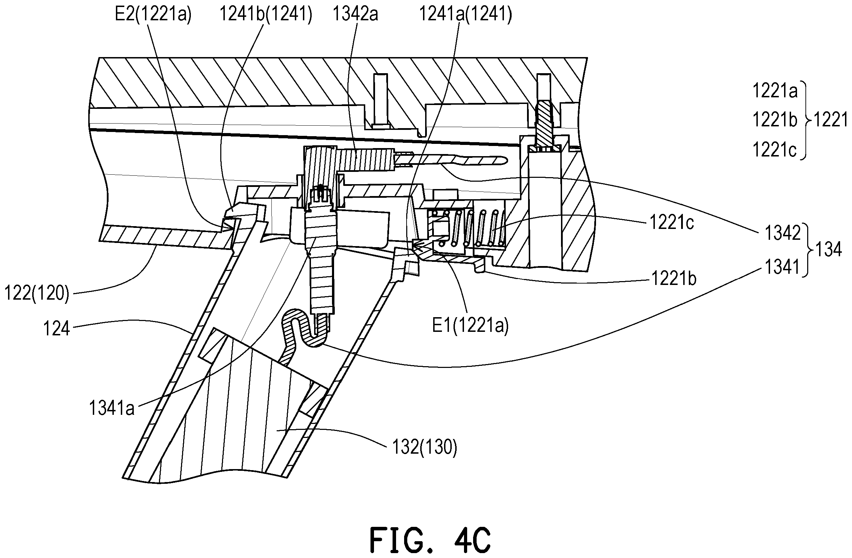

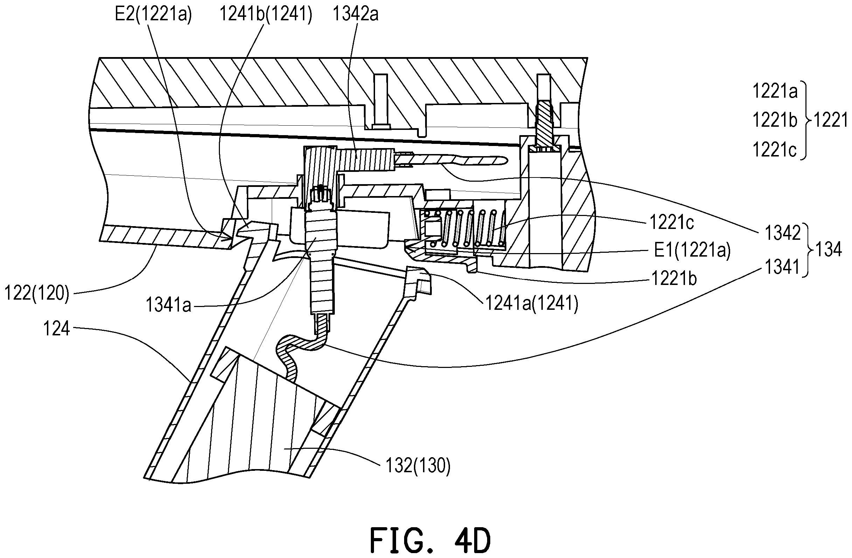

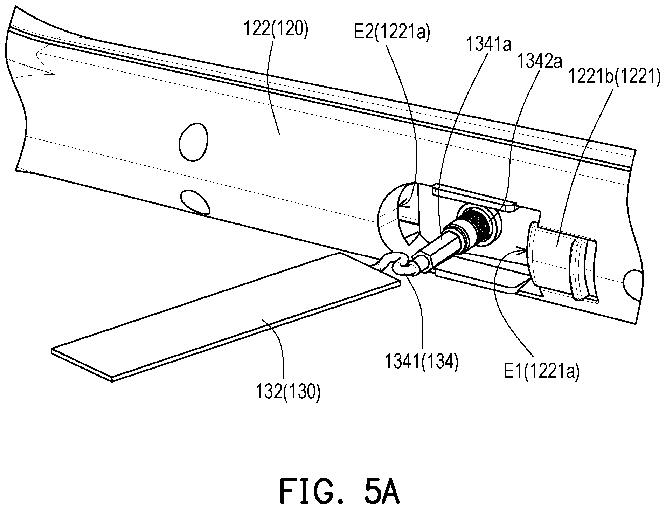

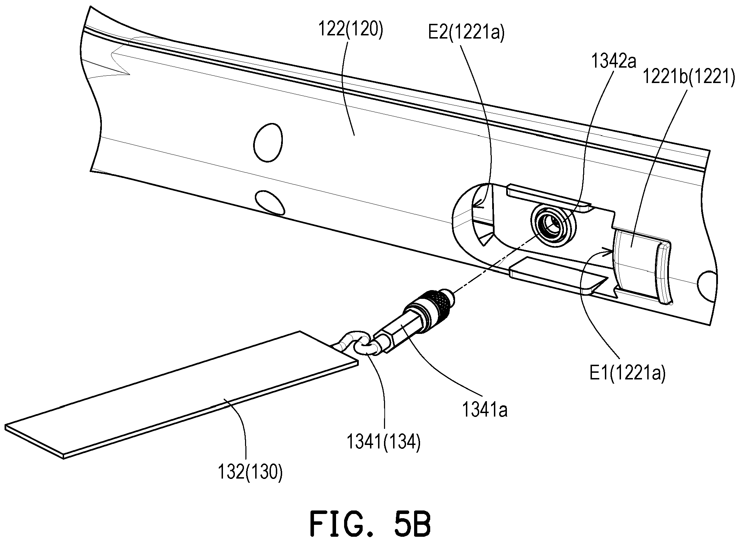

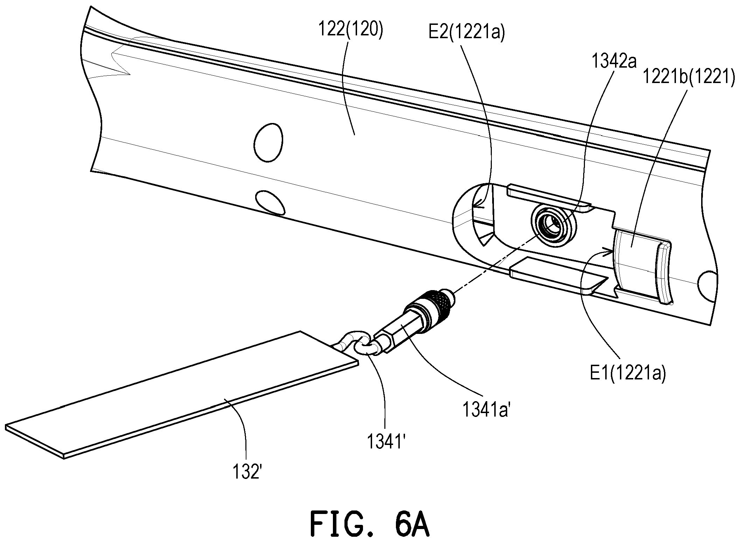

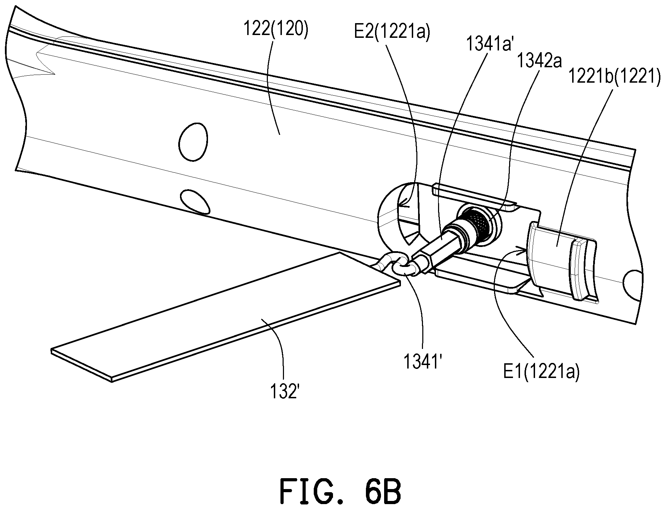

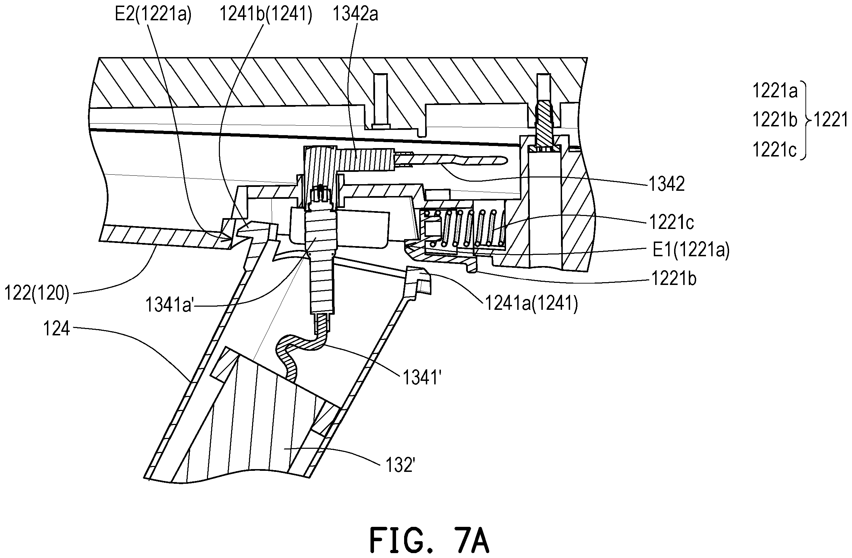

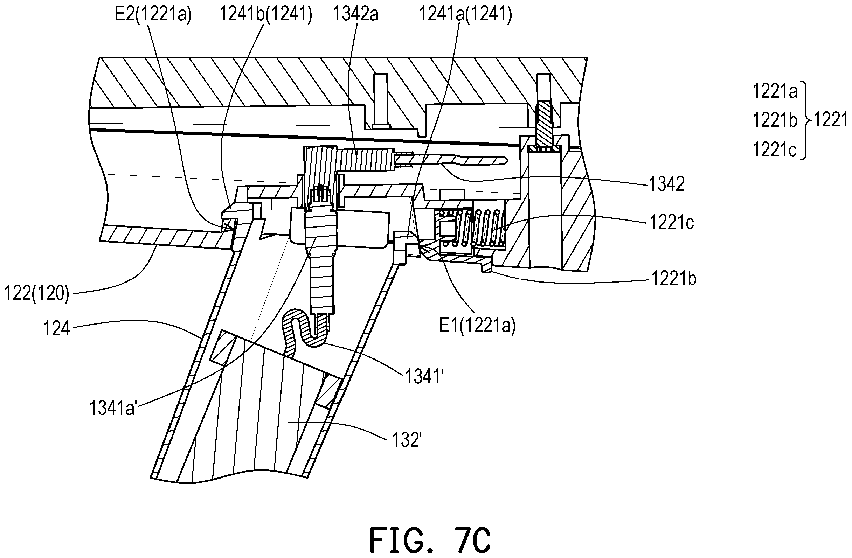

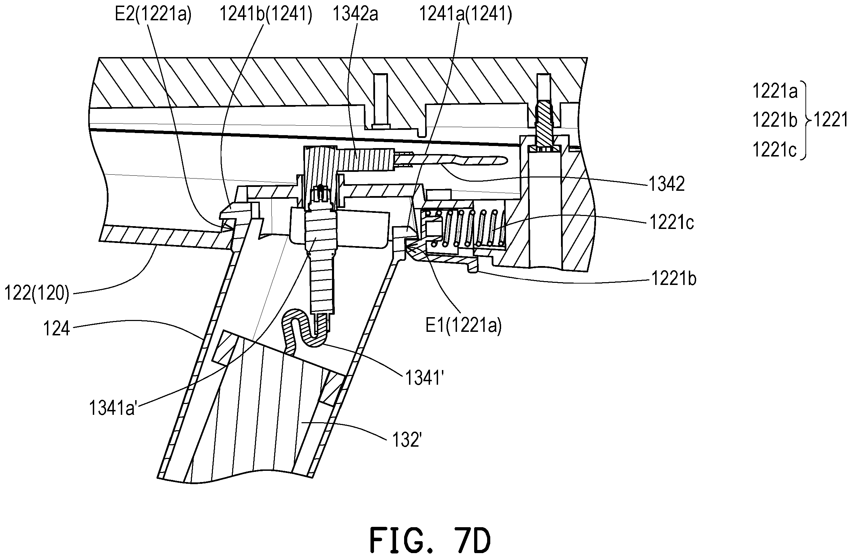

FIG. 4A to FIG. 4D illustrate a disassembly method of a stand in FIG. 2. FIG. 5A and FIG. 5B illustrate a separation method of a first connection portion and a second connection portion in FIG. 2. FIG. 6A and FIG. 6B illustrate a combination method of a second connection portion and another first connection portion in FIG 2. FIG. 7A to FIG. 7D illustrate an assembly method of the stand in FIG. 2. When the user wants to replace the antenna body 132, the sliding member 1221b can be pushed by the finger against the elastic force of the elastic member 1221c as shown in FIG. 4A to FIG. 4B in order to move the sliding member 1221b in the direction D, so that the distance between the inner edge E1 of the slot 1221a formed by the sliding member 1221b and the other inner edge E2 of the slot 1221a is increased, which in turn allows the two hooks 1241a and 1241b of the stand 124 to be detached from the two inner edges E1 and E2 of the slot 1221a of the arm portion 122 by the force applied by the user as shown in FIG. 4B to FIG. 4D. When the finger of the user leaves the sliding member 1221b, the sliding member 1221b is returned to the engaging position by the elastic force of the elastic member 1221c. After the two hooks 1241a and 1241b of the stand 124 are detached from the two inner edges E1 and E2 of the slot 1221a of the arm portion 122 as mentioned above, the user can remove the stand 124 to expose the antenna body 132 as shown in FIG. 5A, disconnect the first connection portion 1341a from the second connection portion 1342a as shown in FIG. 5A to FIG. 5B, and then remove the antenna body 132 and the first wire 1341a.

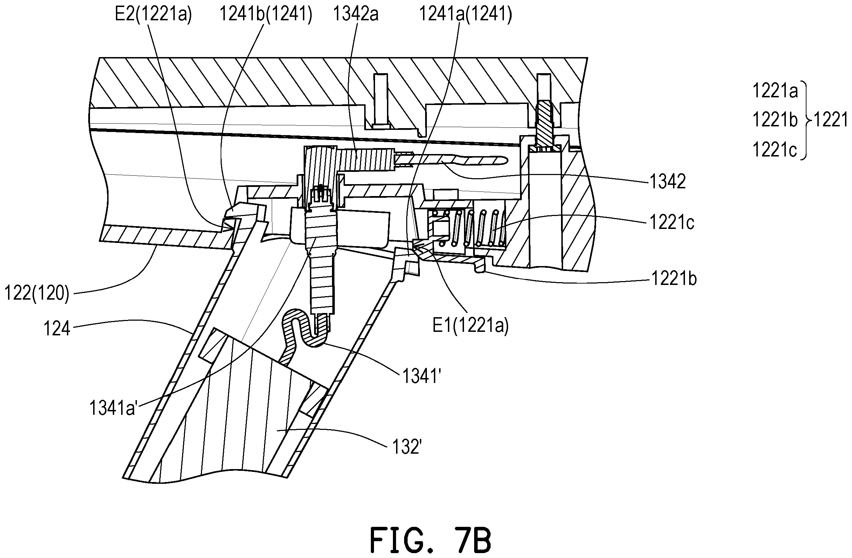

Then, the user can plug another first connection portion 1341a' of a first wire 1341' of another antenna body 132' to the second connection portion 1342a as shown in FIG. 6A to FIG. 6B, and then the stand 124 is sleeved on the antenna body 132' as shown in FIG. 7A, and the sliding member 1221b is moved in direction D by the elastic force of the stand 124 resisting the elastic member 1221c as shown in FIG. 7A to FIG. 7C, so that the distance between the inner edge E1 of the slot 1221a formed by the sliding member 1221b and the other inner edge E2 of the slot 1221a is increased, which in turn allows the two hooks 1241a and 1241b of the stand 124 to enter into the slot 1221a through the application of the force of the user, as shown in FIG. 7B to FIG. 7D, and at this time the hook 1241b can first engage with the inner edge E2 of the slot 1221a. Then, when the hook 1241a passes upward over the sliding member 1221b, the sliding member 1221b is returned to the engaging position by the elastic force of the elastic member 1221c, so that the hook 1241a is engaged with the inner edge E1 formed by the sliding member 1221b of the slot 1221a, so as to assemble the stand 124 into the arm portion 122. Accordingly, the replacement of the antenna body is completed.

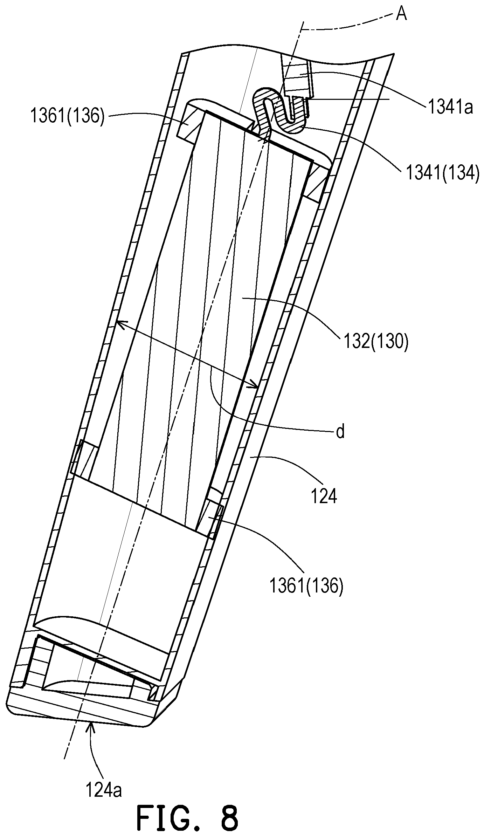

FIG. 8 illustrates a partial structure of the stand and the antenna module in FIG. 2. Referring to FIG. 8, the antenna module 130 of this embodiment further includes an elastic structure 136. The elastic structure 136 is compressed between the antenna body 132 and the stand 124 of the antenna module 130, so that the antenna body 132 of the antenna module 130 can be positioned in the stand 124 by the elastic force of the elastic structure 136. Specifically, the elastic structure 136 includes two elastomers 1361, and the two elastomers 1361 are respectively disposed at opposite ends of the antenna body 132. Each elastomer 1361 in this embodiment is, for example, an annular foam material and is sleeved on the antenna body 132. In other embodiments, the elastomer may be in other suitable forms, and the disclosure is not limited thereto. Furthermore, the stand 124 has a support end 124a relative to the arm portion 122 of the arm structure 120 (shown in FIG. 2), and a width d of the internal space of the stand 124 decreases in a direction from the arm portion 122 of the arm structure 120 toward the support end 124a (i.e., a normal vector axis A of the stand 124). Accordingly, as the antenna body 132 and the elastomer 1361 move towards the support end 124a of the stand 124 by gravity, the elastomer 1361 can be firmly compressed between the antenna body 132 and the stand 124 to securely fix the antenna body 132.

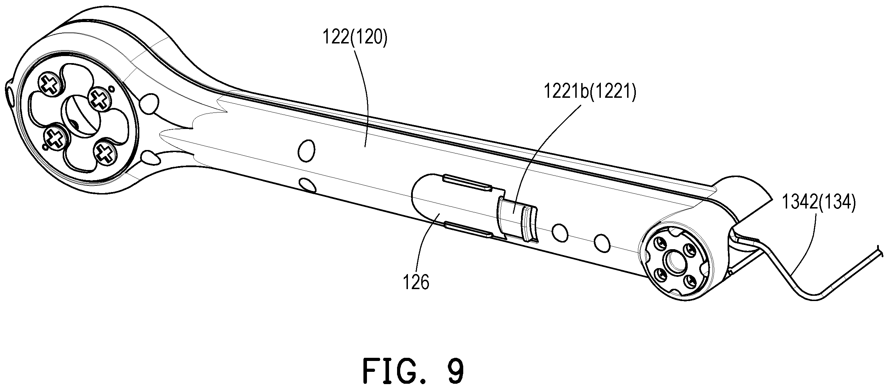

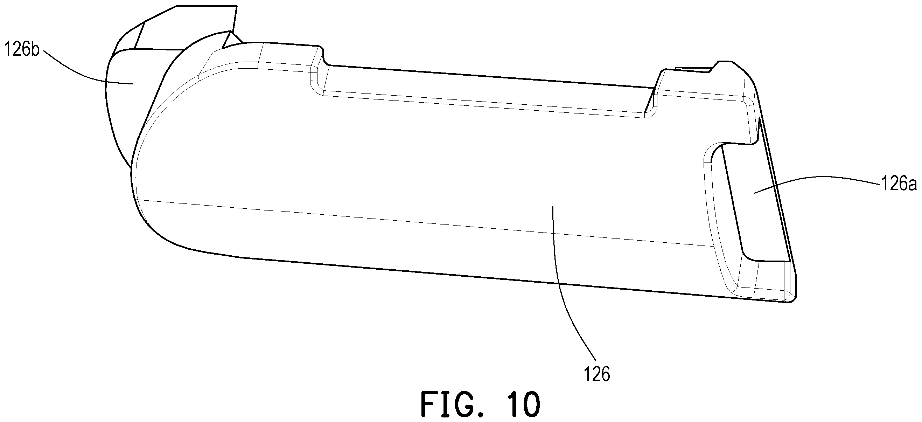

FIG. 9 illustrates the stand in FIG. 2 replaced with a cover. FIG. 10 is a perspective view of the cover in FIG. 9. Referring to FIG. 9 and FIG. 10, the drone 100 of this embodiment may further include a cover 126. When the user wants to store or carry the drone 100, the stand 124, the antenna body 132, and the first wire 1341 can be temporarily detached from the arm portion 122, and the cover 126 can be detachably assembled in the first assembly portion 1221 of the arm portion 122 of the arm structure 120 by replacing the stand 124 with the cover 126. Accordingly, the stand 124 and the rest of the drone 100 are separated from each other, making it easy to store or carry, and the second connection portion 1342a at the arm portion 122 is protected by being covered by the cover 126. Two hooks 126a and 126b of the cover 126 are similar to the two hooks 1241a and 1241b of the stand 124, and their disassembly and assembly methods are the same or similar to the disassembly and assembly methods of the stand 124 in FIG. 4A to FIG. 4D and FIG. 7A to FIG. 7D, and therefore are not repeated in the following.

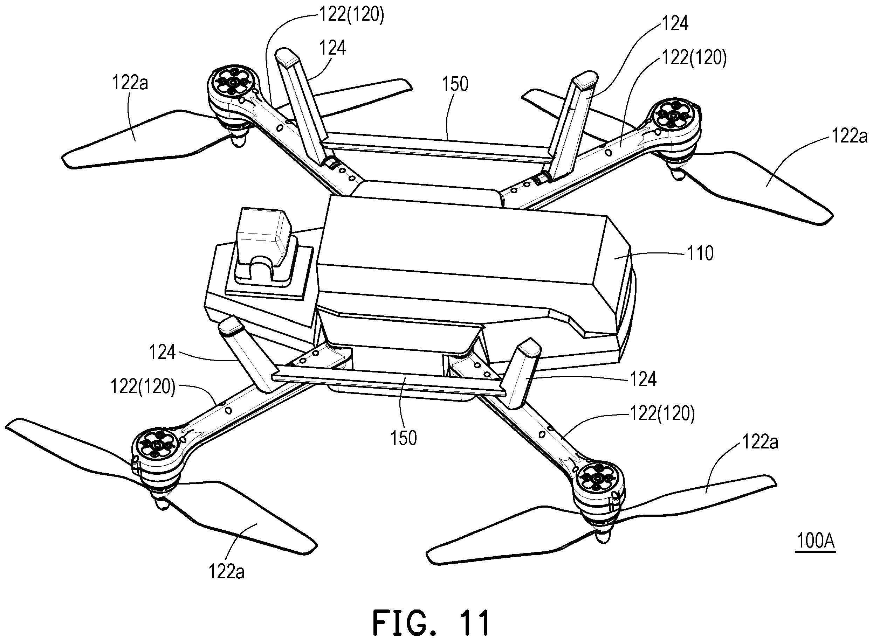

FIG. 11 is a perspective view of a drone according to another embodiment of the disclosure. The difference between the embodiment shown in FIG. 11 and the embodiment shown in FIG. 1 is that a drone 100A of the embodiment shown in FIG. 11 further includes two structural reinforcement rods 150, each structural reinforcement rod 150 is connected between two stands 124 to enhance the overall structural strength of the drone 100A, which in turn helps to reduce the vibration of the body due to the lack of structural strength.

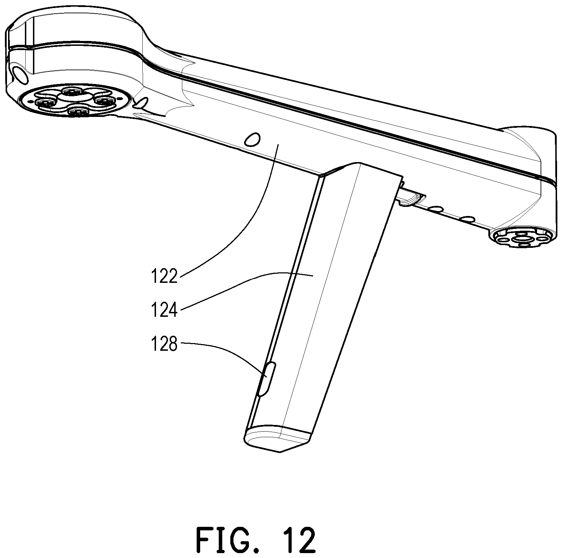

FIG. 12 is a perspective view of an arm structure according to another embodiment of the disclosure. The difference between the embodiment shown in FIG. 12 and the embodiment shown in FIG. 1 is that the drone of the embodiment shown in FIG. 12 further includes a light-emitting element 128. The light-emitting element 128 is disposed on the stand 124 facing the outer side of the drone, and is used to emit indicator light for the user to identify the position and orientation of the drone in the air from a distance.

To sum up, in the drone of the disclosure, the stand is designed to be detachable from the arm structure, and the antenna module can include a first wire and a second wire that can be separated from each other. Accordingly, the antenna module in the stand can be replaced by simply disassembling the stand from the arm structure and separating the first wire and the second wire from each other. Therefore, there is no need to dismantle the entire chassis of the main body and the arm structure in order to replace the antenna body in the stand. Thus, the drone of the disclosure allows the antenna module to be easily replaced.

## Claims

1. A drone (100), comprising:
a main body (110);
an arm structure (120), disposed on an outer side of the main body (110); and
a stand (124), having an antenna module (130), wherein the antenna module (130) is disposed in the stand (124) and extends along an inner wall of the arm structure (120) into the main body (110),
wherein the stand (124) is detachably assembled to the arm structure (120).

2. The drone (100) according to claim 1, wherein the antenna module (130) comprises an antenna body (132) and a wire component (134), the antenna body (132) is disposed in the stand (124), the wire component (134) is connected to the antenna body (132) and extends along the inner wall of the arm structure (120) into the main body (110).

3. The drone (100) according to claim 1, wherein the arm structure (120) comprises an arm portion (122) connected to the main body (110) and having a first assembly portion (1221), the stand (124) has a second assembly portion (1241), and the second assembly portion (1241) is detachably assembled to the first assembly portion (1221).

4. The drone (100) according to claim 1 comprising a plurality of arm structures (120), a plurality of stands (124), and a plurality of antenna modules (130), wherein the antenna modules (130) are respectively disposed in some of the stands (124).

5. The drone (100) according to claim 1, wherein the antenna module (130) further comprises an elastic structure (136) compressed between the antenna module (130) and the stand (124), and the antenna module (130) is positioned in the stand (124) by elastic force of the elastic structure (136).

6. The drone (100) according to claim 1, wherein the stand (124) has a support end (124a) relative to the arm structure (120), and a width of an internal space of the stand (124) gradually decreases in a direction from the arm structure (120) toward the support end (124a).

7. The drone (100) according to claim 1 further comprising a cover (126), wherein the cover (126) is adapted to replace the stand (124) and be detachably assembled to the arm structure (120).

8. The drone (100) according to claim 1 further comprising a light-emitting element (128), wherein the light-emitting element (128) is disposed on the stand (124).

9. A drone (100), comprising:
a main body (110);
an arm structure (120), disposed on an outer side of the main body (110); and
a stand (124), connected to the arm structure (120) and having an antenna module (130), wherein an antenna body (132) is disposed in the stand (124) and comprises a first wire (1341) and a second wire (1342), the first wire (1341) is located in the stand (124), and the second wire (1342) extends along an inner wall of the arm structure (120) into the main body (110),
wherein the first wire (1341) is pluggably connected to the second wire (1342).

10. The drone (100) according to claim 9, wherein the arm structure (120) comprises an arm portion (122) connected between the main body (110) and the stand (124), and the second wire (1342) extends along the arm portion (122) into the main body (110).

11. The drone (100) according to claim 9, wherein the antenna module (130) comprises an antenna body (132) and a wire component (134), the antenna body (132) is disposed in the stand (124), the wire component (134) comprises the first wire (1341) and the second wire (1342), the first wire (1341) is connected to the antenna body (132) and has a first connection portion (1341a), the second wire (1342) has a second connection portion (1342a), and the first connection portion (1341a) is pluggably connected to the second connection portion (1342a).

12. The drone (100) according to claim 9, wherein the first connection portion (1341a) and the second connection portion (1342a) are radio frequency connectors.

13. The drone (100) according to claim 9, wherein the second connection portion (1342a) is disposed at a position of the arm structure (120) corresponding to the stand (124).

14. The drone (100) according to claim 9 further comprising a circuit board (140), wherein the circuit board (140) is disposed in the main body (110), and the second wire (1342) is connected to the circuit board (140).

15. An arm, adapted to a drone (100), comprising:
an arm portion (122), having a first assembly portion (1221), wherein the first assembly portion (1221) comprises a slot (1221a), a sliding member (1221b), and an elastic member (1221c), the sliding member (1221b) is slidably disposed on the arm portion (122) to form one of two opposite inner edges (E1, E2) of the slot (1221a), the elastic member (1221c) is disposed between the sliding member (1221b) and the arm portion (122), and the sliding member (1221b) is maintained in an engaged position by elastic force of the elastic member (1221c); and
a stand (124), having a second assembly portion (1241), wherein the second assembly portion (1241) comprises two hooks (1241a, 1241b) respectively engaged with the two inner edges (E1, E2).

## Amended claims

### Amended claims in accordance with Rule 137(2) EPC.

1. A drone (100), comprising:
a main body (110);
an arm structure (120), disposed on an outer side of the main body (110); and
a stand (124), having an antenna module (130), wherein the antenna module (130) is disposed in the stand (124) and extends along an inner wall of the arm structure (120) into the main body (110),
wherein the stand (124) is detachably assembled to the arm structure (120),
**characterized in that** the drone (100) further comprises a cover (126), and the cover (126) is adapted to replace the stand (124) and be detachably assembled to the arm structure (120).

2. The drone (100) according to claim 1, wherein the antenna module (130) comprises an antenna body (132) and a wire component (134), the antenna body (132) is disposed in the stand (124), the wire component (134) is connected to the antenna body (132) and extends along the inner wall of the arm structure (120) into the main body (110).

3. The drone (100) according to claim 1, wherein the antenna module (130) further comprises an elastic structure (136) compressed between the antenna module (130) and the stand (124), and the antenna module (130) is positioned in the stand (124) by elastic force of the elastic structure (136).

4. The drone (100) according to claim 3, wherein the elastic structure (136) comprises two elastomers (1361), and the two elastomers (1361) are respectively disposed at opposite ends of the antenna body (132).

5. The drone (100) according to claim 1, wherein the stand (124) has a support end (124a) relative to the arm structure (120), and a width of an internal space of the stand (124) gradually decreases in a direction from the arm structure (120) toward the support end (124a).

6. The drone (100) according to claim 1 further comprising a light-emitting element (128), wherein the light-emitting element (128) is disposed on the stand (124).

7. The drone (100) according to claim 2,
wherein the wire component (134) comprises a first wire (1341) and a second wire (1342), the first wire (1341) is located in the stand (124), and the second wire (1342) extends along an inner wall of the arm structure (120) into the main body (110), and
the first wire (1341) is pluggably connected to the second wire (1342).

8. The drone (100) according to claim 7, wherein a first connection portion (1341a) of the first wire (1341) and a second connection portion (1342a) of the second wire (1342) are radio frequency connectors.

9. An arm, adapted to a drone (100), **characterized by** comprising:
an arm portion (122), having a first assembly portion (1221), wherein the first assembly portion (1221) comprises a slot (1221a), a sliding member (1221b), and an elastic member (1221c), the sliding member (1221b) is slidably disposed on the arm portion (122) to form one of two opposite inner edges (E1, E2) of the slot (1221a), the elastic member (1221c) is disposed between the sliding member (1221b) and the arm portion (122), and the sliding member (1221b) is maintained in an engaged position by elastic force of the elastic member (1221c); and
a stand (124), having a second assembly portion (1241), wherein the second assembly portion (1241) comprises two hooks (1241a, 1241b) respectively engaged with the two inner edges (E1, E2).

10. The arm according to claim 9, wherein the arm portion (122) is connected to a main body (110) of the drone (100).

11. The arm according to claim 10, wherein an antenna module (130) comprises an elastic structure (136) compressed between the antenna module (130) and the stand (124), and the antenna module (130) is positioned in the stand (124) by elastic force of the elastic structure (136).

12. The arm according to claim 11, wherein the elastic structure (136) comprises two elastomers (1361), and the two elastomers (1361) are respectively disposed at opposite ends of the antenna body (132).
